(19) Europäisches Patentamt
European Patent Office
Office européen des brevets

(11) Veröffentlichungsnummer : **0 656 370 A1**

(12) # EUROPÄISCHE PATENTANMELDUNG

(21) Anmeldenummer : **94116227.3**

(22) Anmeldetag : **23.11.91**

(51) Int. Cl.[6] : **C08F 2/38**, C08F 220/12, C08K 5/29, C08L 33/06

Diese Anmeldung ist am 14 - 10 - 1994 als Teilanmeldung zu der unter INID-Kode 60 erwähnten Anmeldung eingereicht worden.

(30) Priorität : **06.12.90 DE 4038939**

(43) Veröffentlichungstag der Anmeldung : **07.06.95 Patentblatt 95/23**

(60) Veröffentlichungsnummer der früheren Anmeldung nach Art. 76 EPü : **0 493 673**

(84) Benannte Vertragsstaaten : **DE ES FR GB IT NL**

(71) Anmelder : **BASF Aktiengesellschaft**
**Carl-Bosch-Strasse 38**
**D-67063 Ludwigshafen (DE)**

(72) Erfinder : **Filges, Ulrich, Dr.**
**Otto-Dill-Strasse 15**
**D-67433 Neustadt (DE)**
Erfinder : **Aydin, Oral, Dr.**
**Sophienstrasse 14**
**D-68165 Mannheim (DE)**
Erfinder : **Auchter, Gerhard, Dr.**
**Paray-Le-Monial-Strasse 10**
**D-67098 Bad Dürkheim (DE)**
Erfinder : **Barwich, Jürgen, Dr.**
**Triftbrunnenweg 27**
**D-67434 Neustadt (DE)**
Erfinder : **Anders, Hermann, Dr.**
**Gartenstrasse 35a**
**D-67149 Meckenheim (DE)**
Erfinder : **Langer, Werner, Dr.**
**Wittelsbachstrasse 41**
**D-67061 Ludwigshafen (DE)**
Erfinder : **Vorspohl, Klaus, Dr.**
**Bannwasserstrasse 9**
**D-67069 Ludwigshafen (DE)**

(54) **Mit Luftfeuchtigkeit selbsthärtbare Copolymerisate und Mischungen.**

(57) Mit Luftfeuchtigkeit selbsthärtbare Copolymerisate auf der Basis von Acrylsäure-, Methacrylsäure- und/oder Vinylestern, die unter Verwendung von Silicium enthaltenen Reglern hergestellt wurden, sowie Mischungen derartiger Polymerisate mit Vernetzungskomponenten.

Die Produkte eignen sich als mit Luftfeuchtigkeit selbsthärtbare Kleb-, Dichtungs- und Beschichtungsmassen.

EP 0 656 370 A1

Die vorliegende Erfindung betrifft neue mit Luftfeuchtigkeit selbsthärtbare Mischungen von Copolymerisaten auf der Basis von Acrylsäure-, Methacrylsäure- und/oder Vinylestern mit Vernetzungskomponenten folgenden Aufbaus bzw. folgender Zusammensetzung:

D) härtbare Mischungen aus

1) 50 bis 99,9 Gew.-% eines Copolymerisates D1 (= 100 Gew.-%) aus

a) 30 bis 99,45 Gew.-% eines oder mehrerer $C_1$-$C_{24}$-Alkylester der Acryl- und/oder Methacrylsäure und/oder $C_1$-$C_2$-Vinylester (Verbindungen I),

b) 0,5 bis 25 Gew.-% eines radikalisch copolymerisierbaren Carbonsäureanhydrids (Verbindungen III),

c) 0 bis 40 Gew.-% weiterer Monomerer (Verbindungen IV) und

d) 0,05 bis 5 Gew.-% eines Reglers der allgemeinen Formel Va bzw. Vb

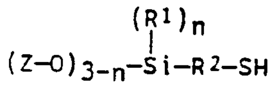

Va

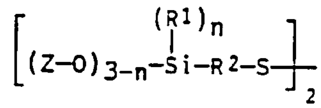

Vb

in der

n ein Wert von 0 bis 2 ist,

$R^1$ eine $C_1$-$C_6$-Alkylgruppe oder die Phenylgruppe bedeutet,

$R^2$ eine $C_1$-$C_{18}$-Alkylgruppe, die Cyclohexyl- oder Phenylgruppe bezeichnet,

Z für eine $C_1$-$C_{18}$-Alkylgruppe, $C_2$-$C_{18}$-Alkylengruppe oder $C_2$-$C_{18}$-Alkinylgruppe steht, deren Kohlenstoffatome durch nichtbenachbarte Sauerstoff- oder Halogenatome ersetzt sein können, oder für eine der Gruppen

$$-N=C(R^3)_2$$

oder

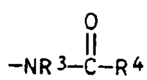 ,

in denen

$R^3$ eine $C_1$-$C_{12}$-Alkylgruppe bedeutet und

$R^4$ eine $C_1$-$C_{18}$-Alkylgruppe bezeichnet;

und

2) 0,1 bis 50 Gew.-% eines zwei- oder mehrwertigen Aldimins und/oder Ketimins (Verbindungen VIII).

Außerdem betrifft die Erfindung die Verwendung dieser härtbaren Mischungen D als mit Luftfeuchtigkeit selbsthärtbare Kleb-, Dichtungs- und Beschichtungsmassen sowie mit Luftfeutigkeit selbsthärtbare Kleb-, Dichtungs- und Beschichtungsmassen, die die härtbaren Mischungen D enthalten.

Aus der älteren deutschen Anmeldung P 3913168 sind Copolymerisate auf der Basis von Alkylacrylaten und/oder -methacrylaten mit freien Isocyanatgruppen bekannt, die als Klebe-, Dichtungs- und Beschichtungsmassen empfohlen werden.

Diese Copolymerisate vermögen jedoch nicht ganz zu befriedigen, da ihr an sich gutes Fließverhalten noch weiter verbesserungsbedürftig ist.

Eine Verbesserung des Fließverhaltens durch Verwendung üblicher Mercaptan-Regler ist zwar beschrieben, ihr Einsatz bedingt jedoch gleichzeitig eine unzureichende Vernetzung bei Feuchtigkeitseinwirkung, insbesondere dann, wenn zur Erniedrigung des Molekulargewichtes hohe Regler-Konzentrationen benötigt werden.

Copolymerisate mit freien Isocyanatgruppen und zusätzlichen freien Anhydridgruppen sind in der DE-A-38 04 589 beschrieben.

Diese Copolymerisate eignen sich jedoch nur als Bindemittelkomponenten in Zweikomponenten-Beschichtungs- und Dichtungsmassen, welche als weitere Komponenten organische Polyhydroxylverbindungen enthalten.

Aus der DE-A 3 601 272 sind Klebstoffe aus mindestens zweiwertigen Isocyanaten und anhydridhaltigen Copolymerisaten, die aktiven Wasserstoff enthalten, bekannt. Diese Klebstoffe werden naturgemäß nur als Zweikomponentenkleber empfohlen, da beim Vermischen der Komponenten zum Einkomponentenkleber die aktivierten Copolymerisate umgehend mit den Isocyanaten reagieren würden. Diese Reaktion bedingt zudem eine unzureichende Topfzeit durch rasches Gelieren bei der Anwendung des Klebstoffes. Darüber hinaus führt

diese Reaktion aufgrund von frühzeitiger Decarboxylierung zur Blasenbildung und zu hoher Oberflächenklebrigkeit der Klebstoffe im ausgehärteten Zustand.

Isocyanathaltige Copolymerisate aus hydroxylhaltigen Acrylaten und zwei- oder mehrwertigen Isocyanaten sind in der DE-A 29 15 864 als härtbare Einkomponenten-Dichtungsmittel beschrieben. Nachteilig ist sowohl die durch die hohe Vernetzungsdichte der ausgehärteten Dichtungsmaterialien bedingte abnehmende Elastizität nach längerer Lagerung als auch die durch Decarboxylierung hervorgerufene Blasenbildung.

Aus der DE-A 37 10 963 sind anhydridhaltige Copolymerisate mit zwei- oder mehrwertigen Aldiminen und/oder Ketiminen bekannt, die als feuchtigkeitshärtbare Bindemittelkombinationen empfohlen werden. Diese Bindemittel zeigen jedoch ein schlechtes Fließverhalten und neigen im ausgehärteten Zustand zur Oberflächenklebrigkeit.

Der vorliegenden Erfindung lag daher die Aufgabe zugrunde, neue Copolymerisate und Mischungen aus derartigen Copolymerisaten mit Vernetzungskomponenten bereitzustellen, die verbesserte anwendungstechnische Eigenschaften aufweisen und insbesondere als mit Luftfeuchtigkeit. selbsthärtbare Kleb-, Dichtungs- und Beschichtungsmassen verwendet werden können.

Demgemäß wurden die eingangs definierten Mischungen D sowie ihre Verwendung als mit Luftfeuchtigkeit selbsthärtbare Kleb-, Dichtungs- und Beschichtungsmassen gefunden.

Weiterhin wurden mit Luftfeuchtigkeit selbsthärtbare Kleb-, Dichtungs- und Beschichtungsmassen gefunden, die die härtbaren Mischungen D enthalten.

Als Verbindungen I eignen sich $C_1$-$C_{24}$-Alkylester der Acryl- und/oder Methacrylsäure und/oder $C_1$-$C_{20}$-Vinylester. Besonders bevorzugte Verbindungen I sind die $C_1$-$C_4$-Alkylester der Acryl- und/oder Methacrylsäure, also z.B. Methyl-, Ethyl-, n-Propyl- und n-Butylacrylat und -methacrylat. Bevorzugt sind iso-Propyl-, iso-Butyl-, sec.-Butyl-, tert.-Butyl-, n-Pentyl-, n-Hexyl-, 2-Ethylhexyl-, Cyclohexyl-, n-Heptyl-, n-Octyl-, Phenylethyl- und Phenylpropylacrylat und -methacrylat. Weiterhin sind sauerstoffhaltige Alkylester der Acryl- und/oder Methacrylsäure wie 2-Ethoxyethyl-, 2-Butoxyethyl- und Furfurylacrylat und -methacrylat zu nennen. Daneben eignen sich Vinylester wie Vinylformiat, -acetat, -propionat, -butyrat, -laurat und -stearat.

Als Verbindung III kommen radikalisch polymerisierbare Carbonsäureanhydride in Betracht, bevorzugt Itaconsäureanhydrid, Citraconsäureanhydrid, Cyclohexendicarbonsäureanhydrid und besonders bevorzugt Maleinsäureanhydrid.

Zusätzliche weitere Monomere als Verbindungen IV sind vor allem Vinylaromaten wie $\alpha$-Methylstyrol, $\beta$-Methylstyrol, Vinyltoluole und tert.-Butylstyrole, Halogenstyrole wie Chlorstyrole, Vinylether von $C_1$-$C_8$-Alkanolen wie Ethylvinylether, Vinylester von $C_2$-$C_{12}$-Alkansäuren wie Vinylacetat und Vinylpropionat, Vinylhalogenide wie Vinylchlorid, niedere ungesättigte Kohlenwasserstoffe wie $\alpha$-Olefine oder konjugierte Kohlenwasserstoffe wie Butadien und Isopren.

Besonders bevorzugte Verbindungen IV sind Styrol und ungesättigte Nitrile wie vornehmlich Acryl- und Methacrylnitril.

Als Si-Regler eignen sich solche der allgemeinen Formel Va bzw. Vb

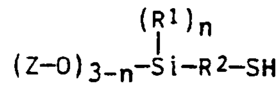

Va

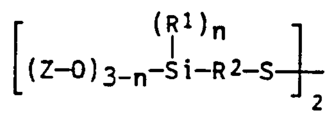

Vb

in der

n ein Wert von 0 bis 2 ist,

$R^1$ eine $C_1$-$C_6$-Alkylgruppe oder die Phenylgruppe bedeutet,

$R^2$ eine $C_1$-$C_{18}$-Alkylgruppe, die Cyclohexyl- oder Phenylgruppe bezeichnet,

Z für eine $C_1$-$C_{18}$-Alkylgruppe, $C_2$-$C_{18}$-Alkylengruppe oder $C_2$-$C_{18}$-Alkinylgruppe steht, deren Kohlenstoffatome durch nichtbenachbarte Sauerstoff- oder Halogenatome ersetzt sein können, oder für eine der Gruppen

$$-N=C(R^3)_2$$

oder

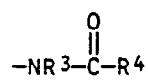 ,

in denen

$R^3$ eine $C_1$-$C_{12}$-Alkylgruppe bedeutet und

$R^4$ eine $C_1$-$C_{18}$-Alkylgruppe bezeichnet.

Besonders bevorzugt sind die Verbindungen Va, darunter vor allem Mercaptopropyltrimethoxysilan und Mercaptopropyltriethoxysilan.

Die erfindungsgemäßen härtbaren Mischungen D werden aus 50 bis 99,9 Gew.-%, vorzugsweise 70 bis 99 Gew.-% eines Copolymerisats D1 und 0,1 bis 50 Gew.-%, vorzugsweise 1 bis 30 Gew.-% eines zwei- oder mehrwertigen Aldimins und/oder Ketimins als Verbindung VIII hergestellt.

Die Copolymerisate D1 bestehen ihrerseits aus 30 bis 99,45 Gew.-%, vorzugsweise 48 bis 96,9 Gew.-% der Verbindungen I, 0,5 bis 25 Gew.-%, vorzugsweise 3 bis 10 Gew.-% der Verbindungen III und 0,05 bis 5 Gew.-%, vorzugsweise 0,1 bis 2 Gew.-% der Verbindungen Va bzw. Vb. Außerdem können bis zu 40 Gew.-% der Verbindungen IV mitverwendet werden.

Als Verbindungen VIII kommen zwei- oder mehrwertige Aldimine und/oder Ketimine in Betracht, wobei dreiwertige und vor allem zweiwertige aus Diaminen und Aldehyden und Ketonen besonders bevorzugt sind. Besonders bevorzugte Diamine sind $C_2$-$C_{16}$-Alkylendiamine, vorzugsweise $C_2$-$C_{12}$-Alkylendiamine und ganz besonders bevorzugt $C_4$-$C_6$-Alkylendiamine wie 1,4-Butylendiamin, 1,5-Pentamethylendiamin und 1,6-Hexamethylendiamin.

Bevorzugt sind Cyclo-$C_6$-$C_{20}$-alkylendiamine, vorzugsweise Cyclo-$C_6$-$C_{15}$-alkylendiamine, vor allem Diaminocyclohexane, 3-Aminomethyl-3,5,5-trimethylcyclohexylamin (Isophorondiamin), Hexahydrotoluylendiamine, Diaminodicyclohexyle, Di-$C_1$-$C_4$-alkyldicyclohexylmethane bzw. -propane, Diaminodicyclohexylmethane bzw. -propane und vor allem 3,3'-Dimethyl-4,4'-diaminodicyclohexylmethan.

Daneben eignen sich $C_4$-$C_{16}$-Oxaalkylendiamine, vorzugsweise $C_4$-$C_{12}$-Oxaalkylendiamine und ganz besonders bevorzugt $C_4$-$C_9$-Oxaalkylendiamine, darunter vor allem Di-(4-aminobutyl)ether.

Weiterhin eignen sich Polyoxyalkylenpolyamine, vorzugsweise zwei- und dreiwertige Polyoxyalkylenpolyamine wie vor allem Polyoxyethylendiamine.

Besonders bevorzugte Aldehyde sind 2,2-Dimethylpropanal und Formylisobuttersäure-$C_1$-$C_4$-alkylester, darunter vor allem der 2-Formylisobuttersäuremethylester.

Bevorzugt sind Butyraldehyd, Isobutyraldehyd, 2-Ethylhexanal, 3-Cyclohexen-1-carboxaldehyd und Hexahydrobenzaldehyd.

Weiterhin eignen sich Formaldehyd, Acetaldehyd, Trimethylacetaldehyd, Propionaldehyd und Acrolein.

Besonders bevorzugte Ketone sind Methylisopropylketon, Methylisobutylketon, Methyl-tert.-butylketon, Diethylketon und Diisobutylketon.

Bevorzugt sind Aceton, Methylethylketon, Methylpropylketon und Methylbutylketon. Weiterhin eignen sich Methyl-n-amylketon, Methylisoamylketon und Methylheptylketon.

Die Ald- und Ketimine sind bekannt oder nach bekannten Methoden erhältlich, und zwar durch Umsetzung der Diamine mit Aldehyden und/oder Ketonen, wobei ein $NH_2$/CO-Verhältnis von 1:1,1 bis 1:4 bevorzugt ist.

Zweckmäßigerweise nimmt man die Umsetzung in einem Lösungsmittel vor. Bevorzugt sind Toluol, Xylol, Benzol, Methylenchlorid, Chloroform, Dichlorethan, Cyclohexan und Heptan.

Die Umsetzung der Diamine mit den Aldehyden und/oder Ketonen erfolgt beispielsweise durch Erhitzen an einem Wasserabscheider in Gegenwart eines Inertgases wie Stickstoff oder Argon und para-Toluolsulfonsäure als Katalysator, im allgemeinen bei 40 bis 200°C, vorzugsweise bei 80 bis 130°C innerhalb von 1 bis 10 Stunden.

Die Copolymerisate D werden durch radikalische Polymerisation wie Masse- oder Lösungspolymerisation hergestellt, wobei die Polymerisation in Lösung bevorzugt ist.

Als Lösungsmittel werden in der Regel Ether wie Tetrahydrofuran und Dioxan, Ester wie Essigsäureethylester und -propylester sowie n-Butylacetat, Glykoletheracetate wie Methyl-, Ethyl- und Butylglycolacetat, Ketone wie Aceton und Cyclohexanon, Dialkylcarbonsäureamide wie Dimethylformamid, Dimethylacetamid und N-Methylpyrrolidon, Aromaten wie Toluol und die Xylole, aliphatische Kohlenwasserstoffe wie Isooctan und chlorierte Kohlenwasserstoffe wie tert.-Butylchlorid verwendet.

Es ist ebenso möglich, als Lösungsmittel einen Weichmacher als Polymerisationsmedium zu verwenden.

Als Initiatoren für die radikalisch ablaufende Polymerisationsreaktion können die üblichen Peroxo- oder Azoverbindungen, auch in Kombination mit Reduktionsmitteln, zweckmäßigerweise in Mengen von 0,05 bis 10 Gew.-%, bezogen auf das Gewicht der Monomeren, eingesetzt werden.

Als bevorzugte Initiatoren sind Dibenzoylperoxid, tert.-Butylperpivalat, tert.-Butylper-2-ethylhexanoat, Di-tert.-butylperoxid, tert.-Butylhydroperoxid, Cumolhydroperoxid, Dilaurylperoxid, tert.-Butylperoximaleinat, tert.-Butylperoxibenzoat, Dicumylperoxid, Didecanoylperoxid, Methylethylketonperoxid, 2,2'-Azobis-(2,4-dimethylvaleronitril), 2,2'-Azobis-(2,3-dimethylbutyronitril) und 2,2'-Azobisisobutyronitril zu nennen. Daneben eignen sich silangruppentragende Azoinitiatoren (EP-A 159 710). Besonders bevorzugte Initiatoren für die Polymerisation der Copolymerisate C2 und E1 sind hydroxylhaltige Initiatoren wie Azo-bis-cyanopentanol und 2,2'-Azobis[2-methyl-N-(2-hydroxyethyl)-propionamid].

Bevorzugte Reduktionsmittel sind Hydrazin, Natriumsulfit, Natriumhydrogensulfit, Kaliumsulfit, Kaliumhydrogensulfit, Ammoniumsulfit und Ammoniumhydrogensulfit, die in Mengen von 0,005 bis 2 Gew.-% eingesetzt werden.

Zur Steuerung der Molekularmasse können in den Copolymerisaten, die keinen Si-Regler Va bzw. Vb enthalten, übliche Regler zugesetzt werden. Bevorzugte Regler sind Tetrachlorkohlenstoff, Tetrabromkohlenstoff, Benzylbromid, Trichlorbrommethan, Butylmercaptan, n-Dodecylmercaptan, tert.-Dodecylmercaptan, Thiophenol und Thioglykolsäurealkylester wie Thioglykolsäuremethyl- und ethylester.

Im allgemeinen führt man die Polymerisation bei 0 bis 200°C, vorzugsweise bei 60 bis 130°C durch.

Zweckmäßigerweise wird die Umsetzung bei Normaldruck vorgenommen, jedoch kann man auch bei vermindertem oder leicht erhöhtem Druck arbeiten, also etwa im Bereich von 0,5 bis 5 bar.

Die Reaktionszeiten betragen normalerweise 1 bis 30, meistens 3 bis 6 Stunden.

Verfahrenstechnisch geht man bei der Lösungspolymerisation in der Regel so vor, daß man einen Teil des Lösungsmittels, gegebenenfalls mit Trocknungsmittel und/oder einem Teil der Monomeren III auf die Reaktionstemperatur erhitzt und die Monomermischung, den Regler und Initiator sowie die Restmenge des Lösungsmittels kontinuierlich zuführt, bevorzugt gleichzeitig in getrennten Zuläufen.

Bei der Massepolymerisation wird im allgemeinen ein Teil des Polymerisationsansatzes vorgelegt, auf die Polymerisationstemperatur erhitzt, wonach anschließend der Rest kontinuierlich zugeführt wird.

Nach beendetem Zulauf setzt man die Polymerisation, gegebenenfalls unter Zusatz weiterer Initiatormengen, noch etwa für eine Zeit von 2 Stunden fort, um Restmonomerengehalte abzusenken. Man kann die Restmonomeren aber ebenso durch Destillation des Lösungsmittels entfernen.

Vorzugsweise wählt man die Polymerisationsbedingungen in an sich bekannter Weise so, daß der Polymerisationsgrad dererfindungsgemäßen Copolymerisate D1 K-Werten von 7 bis 150, besonders 10 bis 100 und vor allem 17 bis 60 entspricht.

Die K-Werte sind relative Viskositätszahlen, die in Analogie zur DIN 53726 bei 25°C bestimmt werden. Die K-Werte der Copolymerisate B1 mit Si-Regler-Anteilen und der Copolymerisate D1 werden in Toluol gemessen, die Bestimmung der K-Werte der übrigen Copolymerisate erfolgt in Tetrahydrofuran.

Zur Herstellung der härtbaren Mischungen D gemäß der Erfindung werden die lösungsmittelenthaltenen Copolymerisate D1 vorgelegt und die Verbindungen VIII bei 0 bis 150°C, vorzugsweise bei 40 bis 120°C zugegeben. Im Falle der lösungsmittelfreien Copolymerisate D1 sind Temperaturen von 0 bis 200°C, vorzugsweise 20 bis 150°C und insbesondere 60 bis 120°C bevorzugt.

Um eine verbesserte Homogenisierung der erfindungsgemäßen Mischungen zu erreichen, ist es auch möglich, die Copolymerisate und die Vernetzungskomponenten zunächst im wasserfreien Lösungsmittel zu lösen und das Lösungsmittel dieser Lösungen wieder destillativ zu entfernen.

Die härtbaren Mischungen D gemäß der Erfindung können als mit Luftfeuchtigkeit selbsthärtbare Kleb-, Dichtungs- und Beschichtungsmassen verwendet werden und werden als solche bevorzugt lösungsmittelfrei eingesetzt.

Die mit Luftfeuchtigkeit selbsthärtbaren Kleb-, Dichtungs- und Beschichtungsmassen können noch übliche Zusatzstoffe, im allgemeinen in Mengen bis zu 400 Gew.-%, bezogen auf die härtbaren Mischungen enthalten.

Übliche Zusatzstoffe sind beispielsweise Weichmacher, Füllstoffe, Verstärkungsmittel, Härtungsbeschleuniger und Lösungsmittel.

Bevorzugte Weichmacher zur Erniedrigung der Glastemperatur und der Viskosität sind Phthalsäureester wie Diethyl-, Di-n-butyl-, Di-isoheptyl-, Di-(2-ethylhexyl)- und Butylbenzylphthalat, Adipinsäureester wie Di-2-ethylhexyl- und Di-iso-octyladipat, Sebacinsäureester wie Di-(2-ethylhexyl)- und Dioctylsebacinat, Polyalkylenglykolester wie Di- und Triethylenglykoldibenzoat, Phosphorsäureester wie Tri-n-butyl-, Tri-isobutyl- und Tri-(β-chlorethyl)phosphat, chlorierte Kohlenwasserstoffe, Alkyldiphenyle und partiell hydrierte Terphenyle.

Die Weichmacher werden üblicherweise in Mengen von 1 bis 20 Gew.-% eingesetzt.

Bevorzugte Füllstoffe und Verstärkungsmittel sind hydrophobiertes Calciumcarbonat, Magnesiumcarbonat, Talk, Titandioxid, Bariumsulfat, Aluminiumoxid, hydrophobiertes Siliciumdioxid, Metallpulver wie Zink- und Eisenpulver, Bentonit, Kaolin und Ruß, die im allgemeinen in Mengen bis zu 300 Gew.-%, vorzugsweise bis zu 100 Gew.-% eingesetzt werden.

Die Füllstoffe werden in der Regel in feiner Körnung zugegeben, wobei die durchschnittliche Korngröße vorzugsweise 0,01 bis 200 μm, insbesondere 0,01 bis 10 μm beträgt.

Bevorzugte Härtungsbeschleuniger für die Umsetzung der freien Isocyanatgruppen sind organische Metallverbindungen wie Bis-[dodecanoyloxy]-dibutyl-zinn, Bis-[dodecanoyloxy]-dioctyl-zinn, Zinnoctylat, Manganoctylat und Monobutylzinnoxid, Aminverbindungen wie N,N-Dimethylcyclohexylamin, Tri-n-butylamin, Triethylendiamin, N,N-Dimethylbenzylamin und 1,8-Diazobicyclo-[5.4.6]-undecen-7 sowie deren Salze, z.B.

die Hydrochloride.

Die Härtungsbeschleuniger werden im allgemeinen in Mengen von 0,01 bis 10 Gew.-% verwendet.

Lösungsmittel werden bevorzugt dann zugesetzt, wenn die Copolymerisate durch Massenpolymerisation hergestellt wurden oder das Lösungsmittel nach der Lösungsmittelpolymerisation zusammen mit den Restmonomeren abdestilliert wurde. Bevorzugte Lösungsmittel zur Verbesserung der Verarbeitbarkeit und zur Erniedrigung der Viskosität sind solche, die bereits für die Polymerisation verwendet wurden, beispielsweise aromatische Kohlenwasserstoffe wie Toluol und Xylol und Ketone wie Aceton und Methylethylketon, die üblicherweise in Mengen bis zu 50 Gew.-% eingesetzt werden.

Zur Erniedrigung der Viskosität lösungsmittelfreier Massen können diese auf bis zu 150°C, bevorzugt auf bis zu 100°C erwärmt und im erwärmten Zustand angewendet werden, wodurch eine hohe Anfangshaftung erreicht wird.

Die erfindungsgemäßen Massen können in Form von Einkomponentensystemen hergestellt werden, indem man alle Bestandteile miteinander vermischt und in einem abgedichteten Behälter gebrauchsfertig lagert. Sie können aber auch als Zweikomponentensysteme verwendet werden, bei denen die Copolymerisate und die Vernetzungskomponenten getrennt gelagert und erst kurz vor der Anwendung zusammengerührt werden.

Im Falle eines Einkomponentensystems muß besonders sorgfältig auf den Ausschluß von Wasser geachtet werden, um vorzeitiges Aushärten zu vermeiden.

Im Falle eines Zweikomponentensystems ist die Anwesenheit geringer Spuren Wasser in den Ausgangs- und Zusatzstoffen weniger kritisch, was sowohl die Verarbeitung der Ausgangsstoffe als auch die Lagerung des Zweikomponentensystems erleichtert.

Die Erfingungsgemäßen härtbaren Mischungen D finden als mit Luftfeuchtigkeit selbsthärtbare Kleb-, Dichtungs- und Beschichtungsmassen Verwendung.

Als solche eignen sie sich zum Verkleben von organischen und anorganischen Materialien untereinander oder miteinander, zum Abdichten sowie zum Beschichten solcher Materialien wie z.B. Metall, Holz, Glas, Keramik, Stein, Beton, Kunststoffen, Textilien, Leder, Pappe und Papier.

Die Massen gemäß der Erfindung härten bei Einwirkung von Luftfeuchtigkeit innerhalb kurzer Zeit aus und weisen im gehärteten Zustand eine erhöhte Elastizität und Dehnfähigkeit, jedoch keine Oberflächenklebrigkeit auf. Sie zeigen darüber hinaus im gehärteten Zustand ein erhöhtes Haftvermögen auf Untergrundmaterialien wie Aluminium, Holz, Glas, Keramik, Beton, Mauerwerk sowie den meisten Kunststoffen.

## Beispiele

Die Verbindungen I, II, III, IV, V, VII und R bilden zusammen jeweils 100 Gew.-% und entsprechen der Zusammensetzung des Polymerisats. Die Gewichtsangabe des Initiators I in Gew.-% bezieht sich jeweils auf das Polymerisat. Die Gewichtsangaben des Lösungsmittels L und des Trocknungsmittels T beziehen sich auf die gesamte Polymerlösung.

### Herstellung von Copolymerisaten A

Eine Lösung aus 2 g (0,2 Gew.-%) Triethylorthoformiat in 200 g (20 Gew.-%) Toluol wurde nach dem Erhitzen auf 100°C im Laufe von 4 Stunden mit einer Mischung der Verbindungen I, II und gegebenenfalls III und IV als Zulauf 1, mit den Verbindungen V in 100 g (10 Gew.-%) Toluol als Zulauf 2 sowie im Laufe von 5 Stunden mit dem Initiator in 100 g (10 Gew.-%) Toluol als Zulauf 3 versetzt, wobei die Zuläufe gleichzeitig, aber getrennt zugegeben wurden.

Danach wurde 2 Stunden bei 100°C nachpolymerisiert, und anschließend wurden das Lösungsmittel sowie noch vorhandene Restmonomere bei 100°C im Vakuum abdestilliert.

Zur Herstellung der Copolymerisate A/18 und A/19 wurden die Verbindungen V bereits im Zulauf 1 zugegeben und die Initiatorlösung separat als Zulauf 2 zugesetzt.

### Anwendungstechnische Eigenschaften

A) Bestimmung der Schälfestigkeit

Zur Bestimmung der Schälfestigkeit wurden in je 400 g (99,5 Gew.-%) der auf 100°C erwärmten Copolymerisate A/1, A/6 und A/9 bzw. der auf 80°C erwärmten Copolymerisate A/15 und A/16 2 g (0,5 Gew.-%) Bis-[dodecanoyloxy]-dibutyl-zinn untergerührt und 300 g (74,6 Gew.-%) dieser Masse im erwärmten Zustand in eine Plastikhülse gegossen und luftdicht verschlossen. Nach 2 Wochen Lagerung wurde die geschlossene Hülse auf 80°C erwärmt, wonach die Masse entnommen und mit einer Schichtdicke von 0,5 mm auf Baumwollstoff glatt aufgetragen wurde. Anschließend wurden verschiedene Materialien aufgelegt und angepreßt. Nach 8 Tagen Lagerung bei Raumtemperatur wurde der Baumwollstoff abgezogen, wobei die Schälfestigkeit als diejenige Kraft gemessen wurde, die notwendig ist, die Materialien wieder zu trennen.

B) Bestimmung der Viskositätseigenschaften

Zur Bestimmung der Viskositätseigenschaften wurden nach vollständigem Entfernen des Lösungsmittels je 400 g (99,5 Gew.-%) der auf 100°C erwärmten Copolymerisate A/17, A/18, A/19, V1/17, V2/17, V1/18, V2/18, V1/19 und V2/19 mit 2 g (0,5 Gew.-%) Bis-[dodecanoyloxyl-dibutyl-zinn vermischt, wonach die Massen bei 100°C in eine Plastikhülse gegossen wurden, die luftdicht verschlossen wurde. Nach Abkühlung auf 50°C wurden die Massen entnommen und 2 Wochen bei einer Schichtdicke von 2 mm einer relativen Luftfeuchtigkeit von 60 % bei Raumtemperatur ausgesetzt.

Die erfindungsgemäßen Copolymerisate A/17, A/18 und A/19 mit Si-Regler waren bei der Entnahme aus den Hülsen niedrigviskos und härteten während der zweiwöchigen Lagerung vollständig aus. Die Copolymerisate V1/17, V1/18 und V1/19 mit Thioglykolsäureethylester als Regler waren viskoser und zeigten auch nach 2 Wochen Lagerung noch Fließeigenschaften. Die Copolymerisate V2/17, V2/18 und V2/19 ohne Regler waren hochviskos und härteten innerhalb von 2 Wochen aus.

Beispiele D/1 bis D/8

D) Herstellung von härtbaren Mischungen D

1) Herstellung von Copolymerisaten D1

Die Copolymerisate D1 wurden analog den Copolymerisaten A hergestellt, die Zuläufe 1 enthielten jedoch eine Mischung der Verbindungen I, III und, in einigen Fällen, IV.

Tabelle 13 zeigt die Zusammensetzungen der Zuläufe 1, 2 und 3 sowie die in THF gemessenen K-Werte der Copolymerisate und die Feststoffgehalte der erhaltenen Copolymerisatlösungen vor der Destillation.

Zum Vergleich sind als Beispiele $V1_1/6$, $V1_1/7$ und $V1_1/8$ die entsprechenden Werte für drei Copolymerisate mit Mercaptoessigsäuremethylester als Regler sowie als Beispiele $V1_2/6$, $V1_2/7$ und $V1_2/8$ die entsprechenden Werte für drei Copolymerisate ohne Regler angegeben, wobei die Vergleichsbeispiele gemäß der DE-A-37 10 963 durchgeführt wurden.

2) Herstellung von Aldiminen und Ketiminen als Verbindungen VIII

Eine Lösung aus 0,05 Gew.-% para-Toluolsulfonsäure, a Gew.-% eines Aldehyds Ald oder Ketons Ket und b Gew.-% eines Amins Am in c Gew.-% Lösungsmittel wurde in Stickstoffatmosphäre solange an einem Wasserabscheider auf T°C erhitzt, bis die theoretische Wassermenge abgetrennt war. Anschließend wurden das Lösungsmittel und die Carbonylkomponente abdestilliert, und im Falle der Aldimine 1 und 2 wurde zusätzlich das Lösungsmittel sowie überschüssiger Aldehyd mit Hilfe eines Dünnschichtverdampfers bei 150°C und 1 mbar abgetrennt.

Die Einzelheiten dieser Versuche sind der Tabelle 14 zu entnehmen.

3) Herstellung von härtbaren Mischungen D

Zu a Gew.-% der auf T°C erwärmten Copolymerisate D1 wurden b Gew.-% der Verbindungen VIII sowie 0,5 Gew.-% Bis-[dodecanoyloxy]-dibutyl-zinn zugegeben, wobei die Copolymerisate D1/6, D1/7 und D1/8 zunächst in 300 g (43 Gew.-%) Toluol gelöst wurden, wonach dieses im Vakuum abdestilliert wurde.

Die Einzelheiten dieser Versuche sind der Tabelle 15 zu entnehmen.

Zum Vergleich sind die Beispiele $V_1/6$, $V_2/6$, $V_1/7$, $V_2/7$, $V_1/8$ und $V_2/8$ aufgeführt, die gemäß der DE-A-37 10 963 durchgeführt wurden.

Anwendungstechnische Eigenschaften

Als anwendungstechnische Eigenschaften der erfindungsgemäßen Mischungen D wurden die Schälfestigkeit und Viskositätseigenschaften ermittelt.

Zum Vergleich wurden die Viskositätseigenschaften der Vergleichsbeispiele $V_1/6$, $V_2/6$, $V_1/7$, $V_2/7$, $V_1/8$ und $V_2/8$ bestimmt.

A) Bestimmung der Schälfestigkeit

Zur Bestimmung der Schälfestigkeit wurden die härtbaren Mischungen D/1 bis D/5 entsprechend den Copolymerisaten A behandelt.

Tabelle 16 zeigt die Ergebnisse dieser Prüfung. In allen Fällen zeigten die erfindungsgemäßen härtbaren Mischungen D hohe Schälfestigkeiten.

B) Bestimmung der Viskositätseigenschaften

Zur Bestimmung der Viskositätseigenschaften wurden die härtbaren Mischungen D/6, D/7 und D/8 sowie die zugehörigen Vergleichsversuche V entsprechend den Copolymerisaten A behandelt.

Die erfindungsgemäßen Mischungen D/6, D/7 und D/8 mit Si-Regler waren bei der Entnahme aus den Hülsen niedrigviskos und härteten während der zweiwöchigen Lagerung vollständig aus. Die Mischungen $V_1$/6, $V_1$/7 und $V_1$/8 mit Mercaptoessigsäuremethylester als Regler waren viskoser und zeigten auch nach 2 Wochen Lagerung noch Fließeigenschaften und Oberflächenklebrigkeit. Die Mischungen $V_2$/6, $V_2$/7 und $V_2$/8 ohne Regler waren hochviskos und härteten innerhalb von 2 Wochen aus.

Bedeutung der Abkürzungen in den Tabellen 1 bis 21

Verbindungen I

| | |
|---|---|
| I/1 = | Methylacrylat |
| I/2 = | Ethylacrylat |
| I/3 = | n-Butylacrylat |
| I/4 = | Ethylhexylacrylat |
| I/5 = | Methylmethacrylat |

Verbindungen II

| | |
|---|---|
| II/1 = | 5-Isocyanato-3-oxapentylmethacrylat |
| II/2 = | Isocyanatoethylacrylat |

Verbindungen III

| | |
|---|---|
| III/1 = | Maleinsäureanhydrid |
| III/2 = | Itaconsäureanhydrid |

Verbindungen IV

| | |
|---|---|
| IV/1 = | Acrylnitril |
| IV/2 = | Styrol |
| IV/3 = | Vinylacetat |

Verbindungen V

| | |
|---|---|
| V/1 = | Mercaptopropyltrimethoxysilan |
| V/2 = | Mercaptopropyltriethoxysilan |

Verbindungen VI

| | |
|---|---|
| VI/1 = | Prepolymer 1 ) |
| VI/2 = | Prepolymer 2 ) siehe Tabelle 5 |
| VI/3 = | Prepolymer 3 ) |
| VI/4 = | Prepolymer 4 ) |
| VI/5 = | 5-Isocyanat-3-(isocyanatmethyl)-1,1,3-trimethylcyclohexan (Isophorondiisocyanat) |
| VI/6 = | Bis-[4-isocyanatphenyl]-methan |
| VI/7 = | 2,4-Bis-[isocyanat]-toluol |
| VI/8 = | 1,6-Bis-[isocyanat]-hexan |
| VI/9 = | Bis-[6-isocyanat-hexylaminocarbonyl]-(6-isocyanat-hexyl)-amin, Isocyanatgehalt 23 Gew.-% |
| IV/10 = | 2,4,6-Trioxo-1,3,5-tris-[6-isocyanat-1-hexyl]-hexahydro-1,3,5-triazin, Isocyanatgehalt 22 Gew.-% |

Alkylenoxide Alk

Alk/1 = Ethylenoxid
Alk/2 = 1,2-Propylenoxid

Starter S

S/1 = Glycerin
S/2 = Dipropylenglykol

Verbindungen VII

VII/1 = Hydroxyethylacrylat
VII/2 = Hyroxypropylacrylat
VII/3 = Hydroxybutylacrylat
VII/4 = Hydroxyhexylacrylat
VII/5 = Polyethylenglykolmonomethacrylat

Verbindungen VIII

VIII/1 = Aldimin 1 aus 1,6-Hexamethylendiamin und 2,2-Dimethylpropanal
VIII/2 = Aldimin 2 aus 1,6-Hexamethylendiamin und 2-Formylisobuttersäuremethylester
VIII/3 = Aldimin 3 aus 3-Aminomethyl-3,5,5-trimethylcyclohexylamin (Isophorondiamin) und Isobutyraldehyd
VIII/4 = Aldimin 4 aus Polyoxypropylendiamin und -triamin und 2,2-Dimethylpropanal
VIII/5 = Ketimin 1 aus 1,6-Hexamethylendiamin und Methylisobutylketon
VIII/6 = Ketimin 2 aus Bis-(4-amino-cyclohexyl)-methan und Methylisobutylketon

Amine Am

Am/1 = 1,6-Hexamethylendiamin
Am/2 = 3-Aminomethyl-3,5,5-trimethylcyclohexylamin (Isophorondiamin)
Am/3 = Polyoxypropylendiamin, MG 230
Am/4 = Polyoxypropylentriamin, MG 440
Am/5 = Bis-(4-amino-cyclohexyl)-methan

Aldehyde Ald

Ald/1 = 2,2-Dimethylpropanal
Ald/2 = 2-Formylisobuttersäuremethylester
Ald/3 = Isobutyraldehyd

Ketone Ket

Ket/1 = Methylisobutylketon

Lösungsmittel L

L/1 = Toluol
L/2 = Essigsäureethylester
L/3 = Cyclohexan

Initiatoren I

I/1 = 2,2'-Azobisisobutyronitril
I/2 = tert.-Butylper-2-ethylhexanoat
I/3 = tert.-Butylperoctoat

Regler R

R/1 = Mercaptoethanol
R/2 = Thioglykolsäureethylester
R/3 = Thioglycerin
R/4 = tert.-Dodecylmercaptan
R/5 = tert.-Mercaptoessigsäuremethylester

Trocknungsmittel T

T/1 = Triethylorthoformiat
T/2 = Tetraethoxysilan

Urethanisierungskatalysatoren U

U/1 = Bis-[dodecanoyloxy]-dibutyl-zinn
U/2 = Bis-[ethylhexanoyloxy]-zinn
U/3 = 1,4-Diaza-bicyclo[2.2.2]-octan

Füllstoffe und Verstärkungsmittel F

F/1 = hydrophobiertes Calciumcarbonat
F/2 = hydrophobiertes Siliciumdioxid
F/3 = Titandioxid

Tabelle 13

Copolymerisate Dl

| | Dl/1 | Dl/2 | Dl/3 | Dl/4 | Dl/5 | Dl/6 | $Vl_1/6$[1] | $Vl_2/6$[2] |
|---|---|---|---|---|---|---|---|---|
| Zulauf 1: | | | | | | | | |
| I/1 | | | | | 20 | | | |
| I/2 | 92 | 93 | 90 | 88 | 72,5 | 96 | 96 | 97 |
| I/3 | | | | | | | | |
| I/4 | | | | | | | | |
| I/5 | | | | | | | | |
| III/1 | 6 | 6 | 8 | 6 | 6 | 3 | 3 | 3 |
| IV/1 | | | | 5 | | | | |
| IV/2 | | | | | 1 | | | |
| Zulauf 2: | | | | | | | | |
| V/1 | 2 | | 2 | 1 | 0,5 | 1 | | |
| V/2 | | 1 | | | | | | |
| R/5 | | | | | | | 1 | |
| Zulauf 3: | | | | | | | | |
| I/1 | 0,5 | 0,5 | 0,5 | 0,5 | 0,5 | | | |
| I/2 | | | | | | | | |
| I/3 | | | | | | 0,6 | 0,6 | 0,6 |
| K-Wert | 17,4 | 22,6 | 17,2 | 20,1 | 23,7 | | | |
| Feststoff-gehalt | 59,8 | 59,8 | 60 | 59,2 | 59,9 | | | |

1) gemäß DE-A-37 10 963 mit Mercaptoessigsäuremethylester als Regler
2) gemäß DE-A-37 10 963 ohne Regler

Tabelle 13 (Fortsetzung)

| | D1/7 | $V1_1/7$[1] | $V1_2/7$[2] | D1/8 | $V1_1/8$[1] | $V1_2/8$[2] |
|---|---|---|---|---|---|---|
| <u>Zulauf 1:</u> | | | | | | |
| I/1 | 20 | 20 | 20 | | | |
| I/2 | 76 | 76 | 77 | 95 | 95 | 96 |
| I/3 | | | | | | |
| I/4 | | | | | | |
| I/5 | | | | | | |
| III/1 | 3 | 3 | 3 | 4 | 4 | 4 |
| IV/1 | | | | | | |
| IV/2 | | | | | | |
| Zulauf 2: | | | | | | |
| V/1 | 1 | | | 1 | | |
| V/2 | | | | | | |
| R/5 | | 1 | | | 1 | |
| Zulauf 3: | | | | | | |
| I/1 | | | | | | |
| I/2 | | | | | | |
| I/3 | 0,6 | 0,6 | 0,6 | 0,6 | 0,6 | 0,6 |
| K-Wert | | | | | | |
| Feststoffgehalt | | | | | | |

1) gemäß DE-A-37 10 963 mit Mercaptoessigsäuremethylester als Regler
2) gemäß DE-A-37 10 963 ohne Regler

Tabelle 14

Aldimine und Ketimine als Verbindungen VIII

| Beispiel | a* [Gew.-%] | Ald bzw. Ket | b* [Gew.-%] | Am | c** [Gew.-%] | L | T [°C] |
|---|---|---|---|---|---|---|---|
| VIII/1 | 65 | Ald/1 | 35 | Am/1 | 63 | L/3 | 81 |
| VIII/2 | 71 | Ald/2 | 29 | Am/1 | 49 | L/1 | 111 |
| VIII/3 | 51 | Ald/3 | 49 | Am/2 | 25 | L/1 | 111 |
| VIII/4 | 57 | Ald/1 | 15 | Am/1 | 52 | L/1 | 111 |
| | | | u. 11 | Am/3 | | | |
| | | | u. 17 | Am/4 | | | |
| VIII/5 | 65 | Ket/1 | 35 | Am/1 | 50 | L/1 | 111 |
| VIII/6 | 54 | Ket/1 | 46 | Am/5 | 50 | L/1 | 111 |

* a+b = 100 Gew.-%

** a+b+c = 100 Gew.-%

Tabelle 15

Härtbare Mischungen D

| Mischung D | a [Gew.-%] | Cop. Dl | T [°C] | b [Gew.-%] | Verb. VIII |
|---|---|---|---|---|---|
| D/1 | 94 | Dl/1 | 100 | 6 | VIII/1 |
| D/2 | 94 | Dl/2 | 100 | 6 | VIII/1 |
| D/3 | 94 | Dl/3 | 100 | 6 | VIII/1 |
| D/4 | 93 | Dl/4 | 100 | 7 | VIII/2 |
| D/5 | 93 | Dl/5 | 100 | 7 | VIII/2 |
| D/6 | 91 | Dl/6 | 30 | 9 | VIII/1 |
| $V_1$/6[1)] | 91 | $Vl_1$/6 | 30 | 9 | VIII/1 |
| $V_2$/6[1)] | 91 | $Vl_2$/6 | 30 | 9 | VIII/1 |
| D/7 | 91 | Dl/7 | 30 | 9 | VIII/1 |
| $V_1$/7[1)] | 91 | $Vl_1$/7 | 30 | 9 | VIIII1 |
| $V_2$/7[1)] | 91 | $Vl_2$/7 | 30 | 9 | VIII/1 |
| D/8 | 91 | Dl/8 | 30 | 9 | VIII/1 |
| $V_1$/8[1)] | 91 | $Vl_1$/8 | 30 | 9 | VIII/1 |
| $V_2$/8[1)] | 91 | $Vl_2$/8 | 30 | 9 | VIII/1 |

1) gemäß DE-A-37 10 963

Tabelle 16

| Schälfestigkeit (N/mm) der härtbaren Mischungen D/1 bis D/5 | | | | | |
|---|---|---|---|---|---|
| Baumwollstoff verklebt mit | D/1 | D/2 | D/3 | D/4 | D/5 |
| Aluminium | 0,3 | 0,4 | 0,4 | 0,5 | 0,6 |
| Holz | 0,6 | 0,6 | 1,0 | 0,6 | 0,5 |
| Glas | 0,2 | 0,2 | 0,4 | 0,4 | 0,4 |
| PVC | 0,1 | 0,2 | 0,2 | 0,3 | 0,4 |
| Gummi | 0,3 | 0,3 | 0,6 | 0,4 | 0,4 |

## Patentansprüche

**1.** Mit Luftfeuchtigkeit selbsthärtbare Mischungen von Copolymerisaten auf der Basis von Acrylsäure-, Methacrylsäure- und/oder Vinylestern mit Vernetzungskomponenten folgenden Aufbaus bzw. folgender Zusammensetzung:

D) härtbare Mischungen aus

1) 50 bis 99,9 Gew.-% eines Copolymerisates D1 (= 100 Gew.-%) aus

a) 30 bis 99,45 Gew.-% eines oder mehrerer $C_1$-$C_{24}$-Alkylester der Acryl- und/oder Methacrylsäure und/oder $C_1$-$C_2$-Vinylester (Verbindungen I),

b) 0,5 bis 25 Gew.-% eines radikalisch copolymerisierbaren Carbonsäureanhydrids (Verbindungen III),

c) 0 bis 40 Gew.-% weiterer Monomerer (Verbindungen IV) und

d) 0,05 bis 5 Gew.-% eines Reglers der allgemeinen Formel Va bzw. Vb

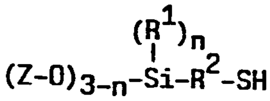

Va

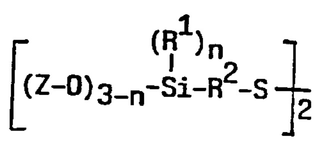

Vb

in der

n ein Wert von 0 bsi 2 ist,

$R^1$ eine $C_1$-$C_6$-Alkylgruppe oder die Phenylgruppe bedeutet,

$R^2$ eine $C_1$-$C_{18}$-Alkylgruppe, die Cyclohexyl- oder Phenylgruppe bezeichnet,

Z für eine $C_1$-$C_{18}$-Alkylgruppe, $C_2$-$C_{18}$-Alkylengruppe oder $C_2$-$C_{18}$-Alkinylgruppe steht, deren Kohlenstoffatome durch nichtbenachbarte Sauerstoff- oder Halogenatome ersetzt sein können, oder für eine der Gruppen

$$-N=C(R^3)_2$$

oder

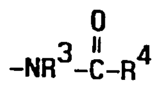 ,

in denen

$R^3$ eine $C_1$-$C_{12}$-Alkylgruppe bedeutet und

$R^4$ eine $C_1$-$C_{18}$-Alkylgruppe bezeichnet;

und

2) 0,1 bis 50 Gew.-% eines zwei- oder mehrwertigen Aldimins und/oder Ketimins (Verbindungen VIII).

2. Mit Luftfeuchtigkeit selbsthärtbare Mischungen aus derartigen Copolymerisaten mit Vernetzungskomponenten nach Anspruch 1, die folgenden Aufbau bzw. folgende Zusammensetzung haben:
   D) härtbare Mischungen aus
   1) 70 bis 99 Gew.-% eines Copolymerisates D1 (= 100 Gew.-%) aus
      a) 48 bis 96,9 Gew.-% der Verbindungen I,
      b) 3 bis 10 Gew.-% der Verbindungen III,
      c) 0 bis 40 Gew.-% der Verbindungen IV und
      d) 0,1 bis 2 Gew.-% der Verbindungen Va bzw. Vb
   und
   2) 1 bis 30 Gew.-% der Verbindungen VIII.

3. Mit Luftfeuchtigkeit selbsthärtbare Mischungen aus derartigen Copolymerisaten mit Vernetzungskomponenten nach Anspruch 1 oder 2, zu deren Herstellung $C_1$-$C_4$-Alkylester oder Acryl- und/oder Methacrylsäure als Verbindungen I verwendet werden.

4. Mit Luftfeuchtigkeit selbsthärtbare Mischungen aus derartigen Copolymerisaten mit Vernetzungskomponenten nach Anspruch 1 bis 3, zu deren Herstellung Maleinsäureanhydrid als Verbindung III verwendet wird.

5. Mit Luftfeuchtigkeit selbsthärtbare Mischungen aus derartigen Copolymerisaten mit Vernetzungskomponenten nach Anspruch 1 bis 4, zu deren Herstellung Acryl- und/oder Methacrylnitril und/oder Styrol als Verbindungen IV verwendet werden.

6. Mit Luftfeuchtigkeit selbsthärtbare Mischungen aus derartigen Copolymerisaten mit Vernetzungskomponenten nach Anspruch 1 bis 5, zu deren Herstellung Mercaptopropyltrimethoxysilan und/oder Mercaptopropyltriethoxysilan als Verbindungen Va verwendet werden.

7. Mit Luftfeuchtigkeit selbsthärtbare Mischungen aus derartigen Copolymerisaten mit Vernetzungskomponenten nach Anspruch 1 bis 6, zu deren Herstellung zweiwertige Aldimine und/oder Ketimine als Verbindungen VIII verwendet werden.

8. Verwendung der härtbaren Mischungen D gemäß Anspruch 1 bis 7 als mit Luftfeuchtigkeit selbsthärtbare Kleb-, Dichtungs- und Beschichtungsmassen.

9. Mit Luftfeuchtigkeit selbsthärtbare Kleb-, Dichtungs- und Beschichtungsmassen, enthaltend die härtbaren Mischungen D gemäß Anspruch 1 bis 7.

Europäisches Patentamt

# EUROPÄISCHER RECHERCHENBERICHT

Nummer der Anmeldung
EP 94 11 6227

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,Y | DE-A-37 10 963 (BAYER AG ) 20.Oktober 1988<br>* das ganze Dokument *<br>--- | 1-9 | C08F2/38<br>C08F220/12<br>C08K5/29<br>C08L33/06 |
| Y | EP-A-0 122 457 (KANEGAFUCHI CHEMICAL IND ) 24.Oktober 1984<br>* Ansprüche *<br>--- | 1-9 | |
| A | EP-A-0 387 587 (BASF AG ) 19.September 1990<br>* das ganze Dokument *<br>--- | 1-5,8,9 | |
| A | DE-A-35 34 874 (BASF LACKE & FARBEN ) 2.April 1987<br>* Ansprüche *<br>--- | 1 | |
| A | EP-A-0 307 701 (BAYER AG ) 22.März 1989<br>* das ganze Dokument *<br>----- | 1-9 | |
| | | | RECHERCHIERTE SACHGEBIETE (Int.Cl.5) |
| | | | C09D<br>C09J<br>C08K |

Der vorliegende Recherchenbericht wurde für alle Patentansprüche erstellt

| Recherchenort | Abschlußdatum der Recherche | Prüfer |
|---|---|---|
| DEN HAAG | 24.März 1995 | Kaumann, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)